# FASCICULE DE BREVET EUROPEEN

(11) **EP 1 441 629 B1**
(45) Date de publication et mention de la délivrance du brevet: **16.03.2005**
(21) Numéro de dépôt: 02803042.7
(22) Date de dépôt: 02.10.2002
(51) Int. Cl.: A47J 37/06, A47J 37/07

(54) **BARBECUE A FOYER VERTICAL A CHARBON DE BOIS, PIERRE DE LAVES, BOIS GAZ ET AUTRES COMBUSTIBLES**
BRATROST MIT VERTIKALER MULDE, DER MIT HOLZKOHLE, LAVAGESTEIN, HOLZ, GAS UND ANDEREN BRENNSTOFFEN VERWENDET WIRD
VERTICAL-PIT BARBECUE USING CHARCOAL, LAVA ROCK, WOOD, GAS AND OTHER FUELS

(30) Priorité: 10.10.2001 FR 0113032
(43) Date de publication de la demande: 04.08.2004
(73) Titulaire: Alazet, Jean, F-75005 Paris (FR)
(72) Inventeur: Alazet, Jean, F-75005 Paris (FR)
(74) Mandataire: Laget, Jean-Loup
(86) Numéro de dépôt international: PCT/FR2002/003353
(87) Numéro de publication internationale: WO 2003/041547

(56) Documents cités:
- DE-A- 1 803 466
- DE-A- 3 138 171
- US-A- 1 836 894
- US-A- 2 828 733

## Description

La présente invention concerne un barbecue à foyer vertical à charbon de bois, ou bois ou pierres volcaniques.

Il existe des barbecues à foyer horizontal qui ont l'inconvénient de carboniser les viandes du fait de l'écoulement des graisses chaudes sur les braises du foyer et de provoquer des fumées importantes.

Il existe généralement des barbecues à foyer vertical qui évitent des inconvénients décrits ci-dessus, mais qui ont d'autres inconvénients, en particulier le tassement des braises qui ne permet pas une cuisson homogène des aliments.

Aussi, la chute des braises incandescentes pendant la cuisson peut provoquer des brûlures et aussi des difficultés de remplissage du combustible dans le foyer.

Le dispositif selon l'invention permet de remédier aux inconvénients ci-dessus.

Le barbecue selon une première caractéristique est constitué d'une boîte rectangulaire dont la partie supérieure est munie d'une trappe à deux battants s'ouvrant vers l'extérieur sur un axe horizontal formant entonnoir en position ouverte pour faciliter le remplissage du combustible ou des pierres volcaniques dans le foyer.

L'une ou les deux faces latérales opposées de la boîte sont ajourées dans le sens horizontal et équipées d'ailettes fixes vers l'intérieur de la boîte avec une certaine inclinaison vers le bas de la boîte, évitant au combustible ou aux pierres volcaniques de tomber vers l'extérieur. Ces ailettes canalisent la chaleur de bas en haut vers l'extérieur et surtout permettent de sustenter les braises du foyer, évitant ainsi un tassement rapide du brasier dans le cas de charbon de bois ou bois et par là rendent la cuisson des aliments homogène.

En effet, selon une deuxième caractéristique de réalisation, les ailettes de sustentation peuvent être actionnées mobiles autour d'un axe horizontal. Selon une troisième caractéristique de réalisation, le foyer peut être équipé de résistances électriques au brûleur à gaz permettant aussi de chauffer les pierres volcaniques.

La boîte comporte des bras, des supports et des potences repliables contre les faces latérales selon un axe vertical situé sur les arêtes de la boîte, ces bras, supports et potences, sont destinés à porter pour les bras les récupérateurs de graisses et stabiliser l'ensemble, pour les supports, à porter des grilles de cuisson verticalement, et pour les potences, à porter des broches de cuisson.

Située dans la partie basse de la boîte, est prévue une grille tiroir portant les braises et un cendrier tiroir de récupération des cendres comme depuis toujours.

Les dessins annexés illustrent l'invention:

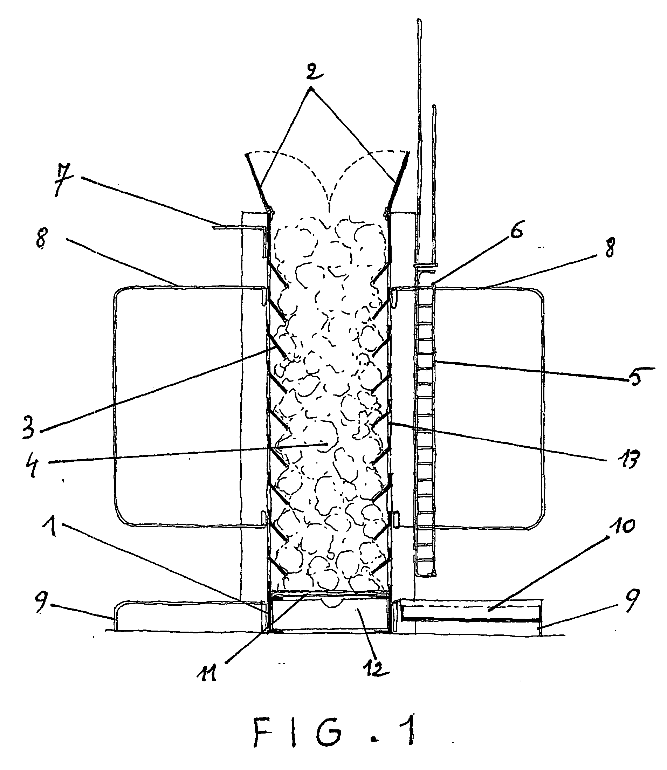

La figure 1 représente une coupe du barbecue.
La figure 2 représente une perspective du barbecue.

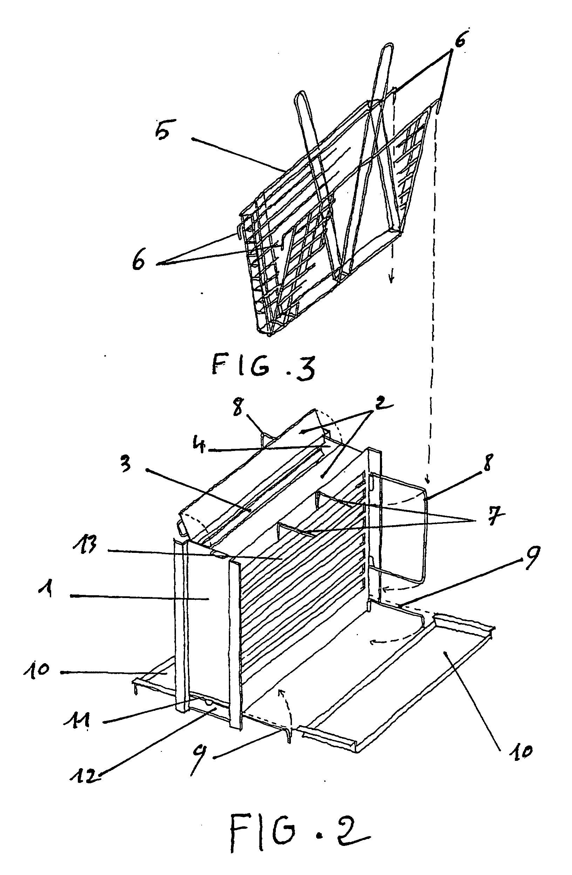

La figure 3 représente une grille de cuisson avec ses moyens d'accroches.

En référence à ces dessins, le barbecue comporte une boîte rectangulaire ((1) dont la partie supérieure est munie d'une trappe à deux battants (2) s'ouvrant vers l'extérieur sur un axe horizontal formant entonnoir en position ouverte.

L'une ou les deux faces latérales opposées de la boîte (1) sont ajourées dans le sens horizontal (13) et équipées d'ailettes fixes (3) dirigées vers l'intérieur de la boîte (1) avec une certaine inclinaison vers le bas de façon à permettre à celle-ci de sustenter les braises du foyer (4), de canaliser la chaleur de bas en haut vers l'extérieur à proximité des grilles de cuisson (5) avec ses moyens d'accroche (6) et potences (7).

Ces ailettes (3) évitent au combustible (4) de tomber vers l'extérieur, soit pendant la cuisson ou lors du remplissage du combustible.

Le foyer (1) peut être équipé de résistances électriques ou rampes brûleurs au gaz non représentées sur les dessins permettant de chauffer les pierres volcaniques (4).

Les ailettes de sustentation (3) peuvent être réglées mobiles autour de leur axe horizontal par des moyens d'actionnement.

La boîte (1) comporte des bras (8) repliables portant les grilles de cuisson (5) avec leurs moyens d'accroche (6), des supports (9) faisant office de stabilisateurs de l'ensemble et de supports des récupérateurs de graisses (10) et des potences (7) permettant de suspendre les broches de cuisson.

Les bras (8), supports (9), et potences (7) sont repliables selon un axe vertical contre les faces latérales de la boîte (1).

A titre indicatif situé dans la partie inférieure de la boîte (1), il est prévu une grille tiroir (11) supportant le foyer (4) et un cendrier tiroir (12) de récupération des cendres.

Le barbecue selon l'invention est particulièrement destiné à réaliser des grillades sans risques, homogènes et sans flammages offrant deux faces de cuisson pour la même quantité de combustible, donc économique.

## Revendications

1. Barbecue à foyer vertical à charbon de bois, au bois ou pierres volcaniques en forme de boîte, le foyer étant constitué d'une boîte (1) dont la partie supérieure est munie d'une trappe d'accès (2) à deux battants s'ouvrant vers l'extérieur sur un axe horizontal formant entonnoir en position ouverte,
l'une ou les deux faces latérales opposées de la boîte (1) étant ajourées dans le sens horizontal (13), **caractérisé par** l'une ou les deux faces latérales opposées de la boîte étant équipées d'ailettes (3) fixes vers l'intérieur de la boîte (1) avec une certaine inclinaison vers le bas permettant de sustenter le combustible ou les pierres volcaniques (4) et de canaliser la chaleur vers les aliments à cuir, et par
des bras (8), supports (9) et potences (7) étant repliables sur les faces latérales de la boîte selon un axe vertical.

2. Barbecue selon la revendication 1 **caractérisé en ce que** les bras (8), supports (9) et potences (7) sont prévus de part et d'autre de la boîte (1) et servent à porter les grilles de cuisson (5) avec leurs moyens d'accroches (6) des broches de cuisson et des récupérateurs de graisses (10).

3. Barbecue selon la revendication 1 ou 2 **caractérisé en ce que** le foyer (1) est équipé de résistances électriques ou rampes brûleurs à gaz servant à chauffer les pierres volcaniques selon le cas.

4. Barbecue selon la revendication 1 ou 2 ou 3 **caractérisé en ce que** le pivotement des ailettes (3) autour d'un axe horizontal peut être réglépar des moyens d 'actionnement.

## Claims

1. Vertical-pit barbecue using charcoal, wood or lava rock in the shape of a box, the pit comprising a box (1), the upper part of which is equipped with an exit opening (2) with two swing doors opening to the outside onto a horizontal axis forming a funnel in the open position,
one of two opposite side faces of the box (1) having a cut-out in horizontal direction (13),
**characterised by** one or two opposite side faces of the box being equipped with blades (3) fixed towards the interior of the box (1) and inclined at a certain angle to the base making it possible to lift the fuel or the lava rock (4) and to channel the heat towards the food to be cooked,
and by arms (8), supports (9) and brackets (7) which can be folded onto the side faces of the box about a vertical axis.

2. Barbecue according to claim 1, **characterised in that** the arms (8), supports (9) and brackets (7) are provided on either side of the box (1) and are used to support the cooking grills (5) with their means of attachment (6), the cooking spits and the fat collectors (10).

3. Barbecue according to claim 1 or 2, **characterised in that** the pit (1) is provided with electric resistors or gas burners used for heating the lava rock, as necessary.

4. Barbecue according to claim 1 or 2 or 3, **characterised in that** the pivoting of the doors (3) about a horizontal axis can be controlled by activating means.

## Patentansprüche

1. Bratrost mit vertikaler Mulde für Holzkohle, Holz oder Lavagestein in Kastenform, wobei die Mulde von einem Kasten (1) gebildet ist, dessen oberer Bereich einen Einfüllzugang (2) mit zwei Flügeln aufweist, die sich nach außen um eine horizontale Achse öffnen und in der Offenstellung einen Trichter bilden, und wobei die eine oder beide gegenüberliegende Seitenflächen des Kastens (1) in horizontaler Richtung (13) durchbrochen ausgebildet sind, **dadurch gekennzeichnet, dass** die eine oder beide gegenüberliegende Seitenflächen des Kastens Flügel (3) aufweisen, die in den Innenraum des Kastens (1) mit einer gewissen Neigung nach unten gerichtet angeordnet sind, um dem Brennstoff oder das Lavagestein (4) niederzuhalten und die Wärme gegen das Grillgut zu leiten, und dass Arme (8), Stützen (9) und Träger (7) abnehmbar an den Seitenflächen des Kastens mit einer vertikalen Achse vorgesehen sind.

2. Bratrost nach Anspruch 1, **dadurch gekennzeichnet, dass** die Arme (8), Stützen (9) und Träger (7) auf beiden Seiten des Kastens (1) angeordnet sind und zur Aufnahme der Bratgrills (5) an ihren Haltern (6), der Grillspieße und der Fettauffangschalen (10) dienen.

3. Bratrost nach Anspruch 1 oder 2, **dadurch gekennzeichnet, dass** die Mulde je nach Fall mit elektrischen Widerständen oder mit Gasbrennern zum Erwärmen des Lavagesteins ausgestattet ist.

4. Bratrost nach Anspruch 1 oder 2 oder 3, **dadurch gekennzeichnet, dass** die um eine horizontale Achse schwenkbaren Flügel (3) durch Betätigungsmittel einstellbar sind.
